**Europäisches Patentamt**

**European Patent Office**

**Office européen des brevets**

(19)

(11) Veröffentlichungsnummer: **0 348 769**
**A2**

(12) **EUROPÄISCHE PATENTANMELDUNG**

(21) Anmeldenummer: **89111042.1**

(22) Anmeldetag: **19.06.89**

(51) Int. Cl.⁴: **F16J 15/16**

(30) Priorität: **25.06.88 DE 3821517**

(43) Veröffentlichungstag der Anmeldung:
**03.01.90 Patentblatt 90/01**

(84) Benannte Vertragsstaaten:
**AT BE CH DE FR GB IT LI NL SE**

(71) Anmelder: **BASF Aktiengesellschaft**
**Carl-Bosch-Strasse 38**
**D-6700 Ludwigshafen(DE)**

(72) Erfinder: **Schultz, Martin**
**Herbert-Kunkel-Strasse 7**
**D-6945 Hirschberg(DE)**

(54) **Vorrichtung zum Andrücken eines den Spalt zwischen zwei relativ zueinander sich bewegenden Teilen abdichtenden Dichtungsmaterials, beispielsweise bei einer Drehtrommelanlage.**

(57) Vorrichtung zum Andrücken eines den Spalt zwischen zwei relativ zueinander sich bewegenden Teilen abdichtenden Dichtungsmaterials - beispielsweise bei einer Drehtrommelanlage - bestehend aus zwei oder mehreren in den feststehenden Teil eingelegten Dichtungselementen, die in axialer Richtung gegen eine auf dem sich drehenden Teil angebrachte Gegenfläche gedrückt werden, wobei das Andrücken der Dichtungselemente (6) mittels eines unter Druck stehenden Schlauches (7) erfolgt.

FIG.1

EP 0 348 769 A2

## Vorrichtung zum Andrücken eines den Spalt zwischen zwei relativ zueinander sich bewegenden Teilen abdichtenden Dichtungsmaterials, beispielsweise bei einer Drehtrommelanlage

Die Erfindung betrifft eine Vorrichtung zum Andrücken eines den Spalt zwischen zwei relativ zueinander sich bewegenden Teilen abdichtenden Dichtungsmaterials - beispielsweise bei einer Drehtrommelanlage -bestehend aus zwei oder mehreren in den feststehenden Teil eingelegten Dichtungselementen, die in axialer Richtung gegen eine auf dem sich drehenden Teil angebrachte Gegenfläche gedrückt werden.

Ein bevorzugtes Anwendungsgebiet obiger Vorrichtung ist die Abdichtung von Drehrohren, beispielsweise Drehtrommelanlagen.

Hierbei müssen die Drehrohre gegen die feststehenden Einlauf- bzw. Auslaufkonstruktionen abgedichtet werden, da in der Regel im Drehrohr ein von der Atmosphäre abweichender Druck ansteht, bzw. ein Falschlufteintritt in das Drehrohr bzw. Gasaustritt in die Atmosphäre vermieden werden muß.

Solche Abdichtungen sind bekannt, und werden beispielsweise von der Firma Burgmann, Wolfratshausen, in den Handel gebracht. Bei dieser Konstruktion wird die Abdichtung so ausgeführt, daß bei zwei relativ zueinander sich bewegenden Teilen in den feststehenden Teil Dichtungselemente, im speziellen eine Packungsschnur, eingelegt werden, die mittels einer Vielzahl von segmentartigen Blechstreifen und Federelementen gegen die sich drehende, mit dem Drehrohr verbundene Gegenfläche - eine kreisringförmige Scheibe - gedrückt werden.

Dieses federnde Andrücken ist notwendig, um Ungenauigkeiten im Rundlauf bzw. in der Planheit der Gegenfläche auszugleichen. Diese Ungenauigkeiten sind in den großen Dimensionen solcher Drehtrommelanlagen oder in Temperatureinflüssen, ausgelöst durch verfahrenstechnische Notwendigkeiten begründet, und haben zur Folge, daß der Abstand zwischen feststehendem Teil und der sich drehenden Gegenfläche um einen Mittelwert sich hin und her bewegt. Das geforderte enge Anschmiegen der Packungsschnur an die Gegenfläche ist umso exakter, je größer die Zahl der Federelemente ist. Diese Federelemente müssen mittels Schrauben nachstellbar sein, um die mit der Abnützung der Packungsschnur nachlassende Anpreßkraft auszugleichen.

Der Nachteil dieser Abdichtung liegt jedoch in der Art des Andrückens der Packungsschnur an die Gegenfläche mittels einer Vielzahl von segmentartigen Blechstreifen und nachstellbaren Federelementen. Diese Abdichtungsart ist in ihrer Konstruktion aufwendig, das Auswechseln der Packungsschnur ist kompliziert und das ständige Nachstellen der Federelemente ist wartungsintensiv.

Es stellte sich daher die Aufgabe, das Andrücken der Dichtungselemente, im speziellen der Packungsschnur so auszugestalten, daß eine über den Umfang völlig gleichmäßige Anpreßkraft entsteht, unabhängig von Ungenauigkeiten der Gegenfläche und Temperatureinflüssen, bei gleichzeitiger Vermeidung der oben genannten Nachteile.

Diese Aufgabe wird erfindungsgemäß dadurch gelöst, daß das Andrücken der Dichtungselemente mittels eines unter Druck stehenden Schlauches erfolgt.

Weitere erfindungsgemäße Merkmale der Erfindung sind Gegenstand des Unteranspruches.

Verschiedene Ausführungsbeispiele der Erfindung mit den wesentlichen erfinderischen Merkmalen sind in der Zeichnung dargestellt und werden im folgenden näher beschrieben.

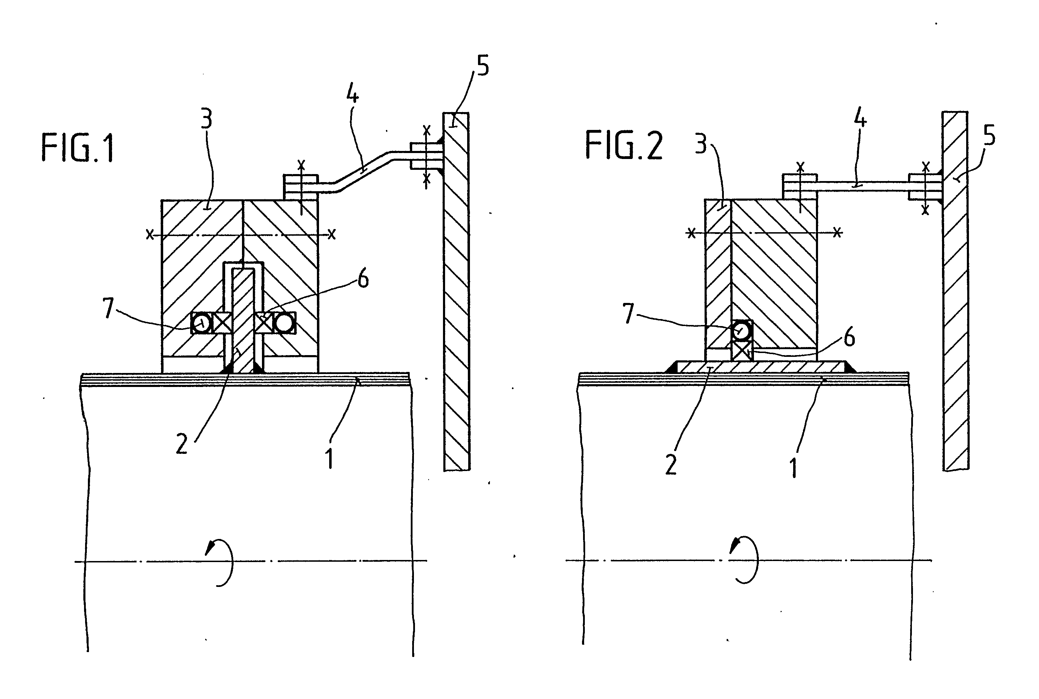

Figur 1 zeigt ein Drehrohr 1, auf das die kreisringförmige Gegenfläche 2 der Abdichtungskonstruktion aufgeschweißt ist. In dem feststehenden Teil 3 der Abdichtungskonstruktion, die über ein flexibles oder starres Befestigungselement 4, je nach Konstruktion der Abdichtung mit der feststehenden Einlauf- bzw. Auslaufkonstruktion 5 der Drehtrommelanlage verbunden ist, ist die Packungsschnur 6 eingelegt. Der unter Druck stehende Schlauch 7 ist so hinter der Packungsschnur ebenfalls im feststehenden Teil der Abdichtungskonstruktion eingeordnet, daß eine über die gesamte Packungsschnurlänge gleichmäßig verteilte Anpreßkraft die Packungsschnur auf die mit dem Drehrohr umlaufende Gegenfläche andrückt. Der im Schlauch herrschende Druck wird in der Regel mittels eines Fluids, beispielsweise Preßluft oder Wasser, erzeugt. Sämtliche als Nachteil beschriebene Ungenauigkeiten der Gegenfläche, die eine Bewegung der Packungsschnur zur Folge haben, werden von dem Schlauch mitgemacht. Die durch die Abnützung der Packungsschnur nachlassende Anpreßkraft kann am Druck des im Schlauch vorhandenen Fluids erkannt werden, und mittels Nachfüllen von Preßluft bei laufendem Betrieb korrigiert werden.

Die Druckkonstanz kann mittels eines Druckreservoirs und entsprechender Ausrüstung mit Meß- und Regelgeräten automatisiert werden. Des weiteren kann es sinnvoll sein, das Fluid für Wärmeaustausch zu nutzen, in dem es ständig durch den Schlauch hindurchgeleitet wird. Eine weitere Variation besteht darin, daß der Schlauch endlos oder endlich beschaffen sein kann.

Letztendlich wird die Abdichtung von zwei relativ zueinander sich bewegenden Teilen mittels der erfindungsgemäßen Vorrichtung zum Andrücken des abdichtenden Dichtungsmaterials eindeutig verbessert.

Es versteht sich von selbst, daß die erfindungsgemäße Vorrichtung nicht auf die vorstehend beschriebene Ausführung beschränkt ist, sondern im Rahmen der erfindungsgemäßen Merkmale konstruktiv variiert werden kann.

Solche möglichen anderen Ausführungsformen werden beispielsweise nachstehend beschrieben.

Figur 2 zeigt eine Konstruktion bei der die kreisringförmige Gegenfläche durch ein über das Drehrohr geschobenes Rohrstück 2 ersetzt wird, das mit dem Drehrohr zu einer Einheit verschweißt ist.

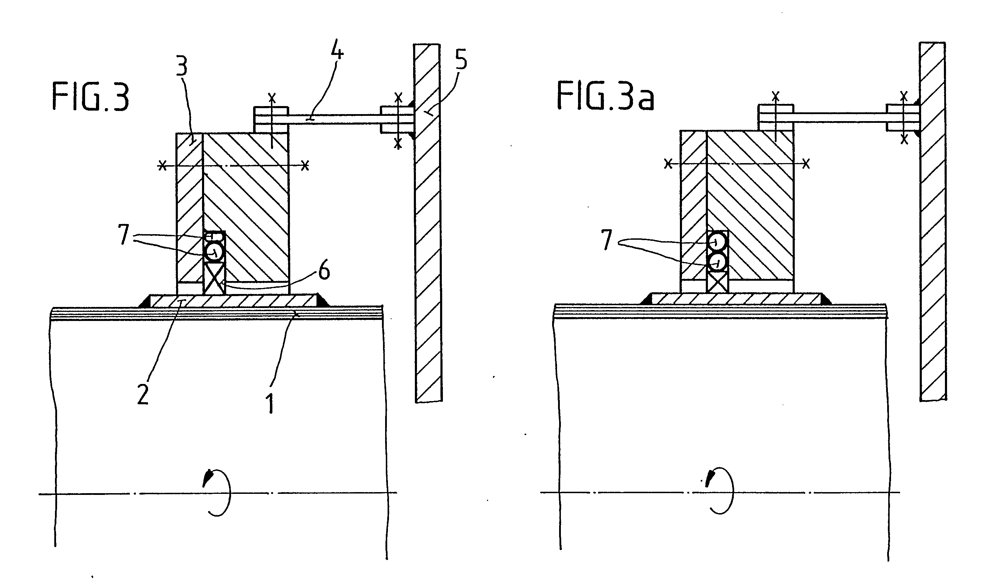

Figur 3 bzw. 3a zeigt eine Konstruktion bei der zwei oder mehrere Schläuche hintereinander zur Erhöhung der Elastizität angeordnet sind. Dabei kann ein Schlauch, wie in Figur 3 dargestellt, ungefüllt eingelegt werden, um erst dann, wenn es die abgezehrte Packungsschnur verlangt - gemäß Figur 3a - mit Druck beaufschlagt zu werden.

Über den Druck des Fluids kann während des Betriebs die Anpreßkraft erhöht bzw. erniedrigt werden, je nach den Erfordernissen des Betriebes. Es ist auch möglich bei bestimmten Betriebszuständen, wie beispielsweise beim An-und Abfahren oder bei Probeläufen der Drehtrommelanlage zur Schonung der Packungsschnur den Druck des Fluids ganz wegzunehmen und die Dichtung zu einem bestimmten Zeitpunkt durch Aufgabe von Druck wieder aktiv zu machen.

In bestimmten Fällen kann es vorteilhaft sein, die Packungsschnur von der Gegenfläche abzuheben, was durch Entspannen und Anlegen von Vakuum an den Schlauch bewerkstelligt werden kann.

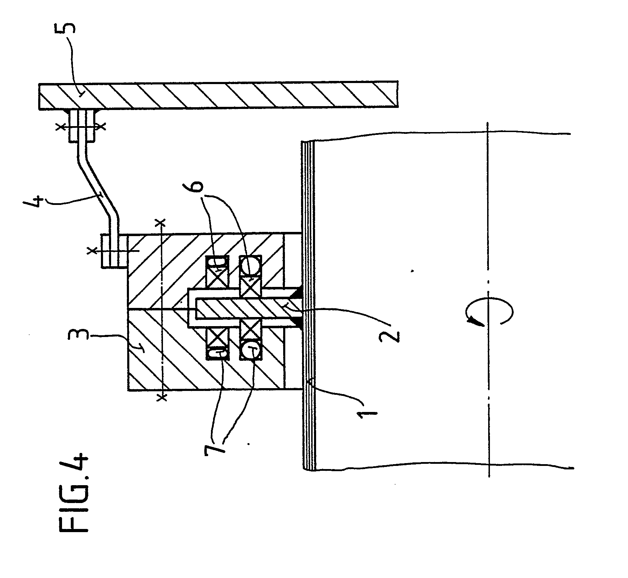

Der sofortige Einsatz einer weiteren im Ruhezustand montierten Packungsschnur bei Abnutzung oder Zerstörung der ersten Packungsschnur ist mit der Ausgestaltung der Erfindung gemäß Fig. 4 möglich. Dabei kann durch Aufgabe von Druck auf den schlaffen Schlauch der Reservepackungsschnur ohne Betriebsunterbrechung diese Packungsschnur aktiv gemacht werden.

Eine weitere Variation der Ausführungsform besteht darin, daß beispielsweise Teil 3 - gemäß Ausführungsform Figur 1 - mit dem Drehrohr 1 verbunden ist, also Packungsschnur 6 und Schlauch 7 mit dem Drehrohr 1 umlaufen, und die Gegenfläche 2 feststehend ausgeführt ist.

## Ansprüche

1. Vorrichtung zum Andrücken eines den Spalt zwischen zwei relativ zueinander sich bewegenden Teilen abdichtenden Dichtungsmaterials - beispielsweise bei einer Drehtrommelanlage - bestehend aus zwei oder mehreren in den feststehenden Teil eingelegten Dichtungselementen, die in axialer Richtung gegen eine auf dem sich drehenden Teil angebrachte Gegenfläche gedrückt werden, dadurch gekennzeichnet, daß das Andrücken der Dichtungselemente (6) mittels eines unter Druck stehenden Schlauches (7) erfolgt.

2. Vorrichtung nach Anspruch 1, dadurch gekennzeichnet, daß anstelle der Dichtungselemente eine Packungsschnur verwendet wird.

FIG.1

FIG.2

3
4
5
6
7
2
1

3
4
5
6
7
2
1

EP 0 348 769 A2

95/88

FIG.3

FIG.3a

95/88

FIG.4